# EUROPEAN PATENT SPECIFICATION

(11) **EP 1 440 337 B1**
(45) Date of publication and mention of the grant of the patent: **12.01.2011**
(21) Application number: 02783915.8
(22) Date of filing: 04.11.2002
(51) Int. Cl.: G02B 6/13

(54) **Method for producing a light guide using glass paste printing on a substrate and device produced with the method**
Verfahren zur Herstellung eines Lichtleiters unter Verwendung eines Glaspastendruckes auf ein Substrat und Anordnung, die mit dem Verfahren hergestellt wird
Procédé de fabrication d'un guide de lumière utilisant l'impression d'une pâte de verre sur un substrat et dispositif produit par le procédé

(30) Priority: 02.11.2001 SE 0103682; 02.11.2001 US 330881 P
(43) Date of publication of application: 28.07.2004
(73) Proprietor: IMEGO AB, 411 33 Göteborg (SE)
(72) Inventor: BERGSTEDT, Leif, S-518 40 Sjömarken (SE); LÖFVING, Björn, S-413 18 Göteborg (SE)
(74) Representative: Inger, Lars Ulf Bosson
(86) International application number: PCT/SE2002/002009
(87) International publication number: WO 2003/038491

(56) References cited:
- US-A- 5 261 022
- DATABASE EPODOC [Online] EUROPEAN PATENT OFFICE, THE HAGUE, NL KR9711521B
- PATENT ABSTRACTS OF JAPAN vol. 1997, no. 12, 25 December 1997 (1997-12-25) & JP 09 222525 A (TDK CORP.), 26 August 1997 (1997-08-26)
- PATENT ABSTRACTS OF JAPAN vol. 012, no. 313, 25 August 1988 (1988-08-25) & JP 63 081408 A (SHIMADZU CORP.), 12 April 1988 (1988-04-12)

## Description

### TECHNICAL AREA

The present invention relates to a waveguide arrangement for guiding a signal, specially an optical signal, comprising at least one optical waveguide arranged on a substrate, preferably a ceramic substrate.

### DESCRIPTION OF STATE OF THE ART

Optical communication is being utilized in more applications today than ever before. These optical systems provide benefits not previously available in electrical systems. Optical fibers have been established as the transmission device of choice for telecommunications, supporting very high bandwidth and low losses over long distances, providing a capability that far exceeds the copper-wire technology it replaces. Research is now looking at a possibility of applying optical wiring for shorter distances, for example in between electro-optic components on circuits, inter circuit communication, inside computers, medical applications and so on.

In optical telecommunication, optical signals are traditionally guided using fiber optical technology, optical waveguides, connectors, components and other types of circuitry or transmitted in free space propagation. However, the prior art does not disclose any technology wherein the optical waveguides for telecommunication are arranged onto a (especially) ceramic carrier.

In US 5,937,125, US 5,574,814 and US 5,452,390, applications including LTCC (Low Temperature Cofired Ceramic) -technology in the optical area are disclosed. The documents show different optical contacts wherein LTCC-technology has been used to a type of bedding or a base plate in the conducts. None of these documents show a conductor being applied directly on a LTCC-carrier.

Shuenemann et al. in Sensors and Actuators 73 (1999) p. 153-168, Elsevier Science S.A. shows a module using LTCC-technology. The module is adjusted for managing signals of a micro flow, electronics and optics.

The aim of Korean patent document No. 9,711,521 is to reduce the manufacturing cost and the loss of a propagation horn. Thus, a method for manufacturing an optic propagation horn is disclosed, comprising a first through fourth steps. The first step is to manufacture a paste, which is used for manufacturing glass by using silica powder. The second step is to coat the paste on a substrate by a screen-printing method and to thermally process and to form a buffer layer. The third process is to coat the paste on the buffer layer and to form a core layer by thermal processing with lower temperature than the thermal processing temperature of the buffer layer. The fourth step is to coat the paste on the core layer and form a clad layer by thermally processing with lower temperature than that of the core layer.

This document does not concern using different glass types having different characteristics as same paste is used to make all guiding parts.

An optical waveguide is disclosed in US 5,261,022, which waveguide comprises a substrate of A12O3 and a silica glass film of SiO2 applied thereon. The glass film has between 35-90 mol % Si02. The device may be used in conjunction with electronics on the same substrate to form opto-electronic interconnections. The invention may also be used to apply a thin film glass glaze to a ceramic substrate. Also, in this document same guiding material having same characteristics are used.

### BRIEF DESCRIPTION OF THE INVENTION

According to JP9222525 an optical waveguide has a lower clad layer on a substrate and the cores having a rectangular section on the lower clad layer. Both flanks and front surfaces of the cores are coated with the upper clad layer. The formation of the cores and the upper clad layer is executed by applying a coating liquid containing glass power by screen printing or spin coating, then, baking the coating. The screen printing method or spin coating method is used for forming the lower clad layer in the case the optical waveguide having the structure having the lower clad layer on the substrate is manufactured.

According to JP63081408, photoconductive paste where a transparent binder is added to fine glass particles are obtained by burning the same gaseous raw materials as an optical fiber is printed on an alumina substrate with a prescribed pattern as a thick film, and this film is sintered in a sintering furnace to form a lower clad layer. Another photoconductive paste having a different fine glass particle composition is printed on said pattern with a pattern slightly smaller than that of the lower clad layer as a thick film, and this film is sintered in the sintering furnace to form a core layer through which the light passes. The same photoconductive paste as the lower clad layer is printed over the core layer and the lower clad layer as a thick film, and this film is sintered in the sintering furnace to form an upper clad layer.

The invention also relates to a method for manufacturing a conductor-carrier arrangement for conducting an optical signal according to claim 1. The conductor arrangement comprising at least one optical guide arranged on a ceramic substrate by providing the ceramic substrate with at least one paste, and fixing at least one optical guide by pressing on said ceramic substrate by means of said paste and providing said optical guide with a covering layer having different characteristics than said optical guide. The method further comprises the step of providing the optical guide with at least one covering layer before or after arranging said optical guide on said substrate. The method further comprises the step of initially providing the ceramic substrate with an intermediate support, and providing the intermediate support with a second optical guide. The method further comprising the step of providing the optical guide on said substrate through offset printing.

### BRIEF DESCRIPTION OF THE DRAWINGS

In the following the invention will be described with reference to the embodiments according to enclosed drawings, in which:
- Fig. 1: is a side-view of a first embodiment of a guiding arrangement produced according to the invention,
- Fig. 2: is a side-view of a second embodiment of a guiding arrangement produced according to the invention, and
- Fig. 3: is a flow diagram illustrating some of the manufacturing steps.

### DESCRIPTION OF PREFERRED EMBODIMENTS

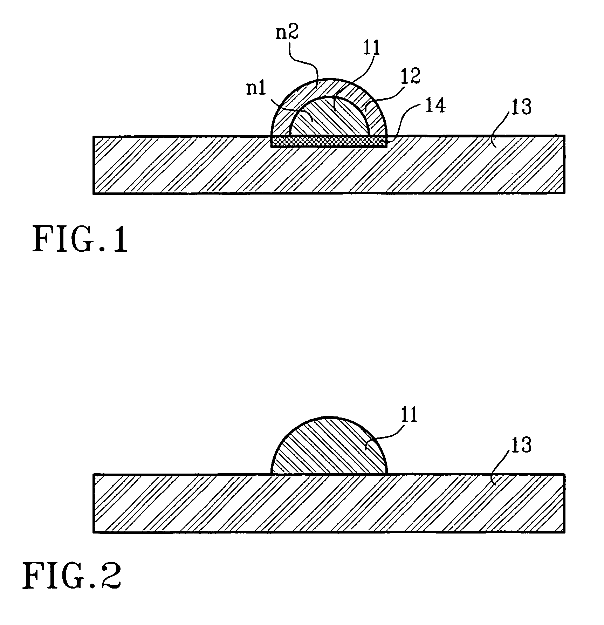

A carrier arrangement 10 provided with a waveguide arrangement is schematically shown in Fig 1, and consists of at least one core section 11, provided on substrate 13. Preferably, the core section is manufactured of a ceramic material such as a glass composite material, a glass, or the like, substantially transparent material in the wavelength band used in a particular application. The cross section of the core can be arbitrary chosen but can be rectangular shaped, semi circular or resembles a segment of a circle. The width of the cross-section is preferably 1 - 1000 µm.

In the preferred embodiment, the core 11 is provided with at least one coating in form of a cladding layer 12 or the like. The cladding layer 12 is also consists of a ceramic material such as a glass material, or the like. The cladding layer 12 is substantially transparent as well Additionally, different glass types having different reflective indexes can be used.

However, the refractive index n2 of the cladding 12 preferably differs from the refractive index n1 of the core 11. Due to the difference in refractive index, in the case that both core and cladding are transparent, the inner surface in the case the cladding is reflecting, an optical signal is guided in the arrangement.

Furthermore, it is also possible to arrange the optical waveguide to constitute a core layer 11 only, i.e. without any cladding layer 12, see Fig. as a comparative example, For example, The core 11 can be doped to introduce reflecting properties in the core near the surface, or the core can have a varying profile of index of refraction through its cross section.

The cladding layer 12, as seen in Fig. 1, completely surrounds the core 11 and when the complete optical waveguide 11, 12 and 14 is subsequently arranged or the carrier such as a ceramic substrate 13 the part 14 of the cladding constitute a "foot" in form of an intermediate support, whereupon the optical core 11 is provided. In this way, both the transmission characteristics and manufacturing technology are improved. The intermediate support 14 consists of a ceramic material such as a glass transparent for the actual optical wavelength as the cladding layer, as description above.

the ceramic substrate 13 is manufactured of a LTCC (Low Temperature Cofired Ceramic) material. However, a HTCC (High Temperature Cofired Ceramic) material can be possible as well. The optical waveguide core 11 is provided on the ceramic substrate 13 with the covering cladding layer 12 according to above. Moreover, the cladding layer 12 can also be provided on the core 11 in different stages of the manufacturing process. The core 11 is provided on the ceramic substrate 13 by means of a paste applied on the ceramic substrate 13, whereby the optical conductor 11 is applied, e.g. by pressing it onto the substrate 13. In this way, the optical waveguide can obtain a flattened cross-section arranged on the ceramic substrate 13. Then the organic matter of the paste is fired. Consequently, the waveguide 11 is fixedly arranged on the substrate 13.

The carrier arrangement 10 according to the invention can be employed in applications for guiding a signal such as an electro-magnetic radiation, e.g. light.

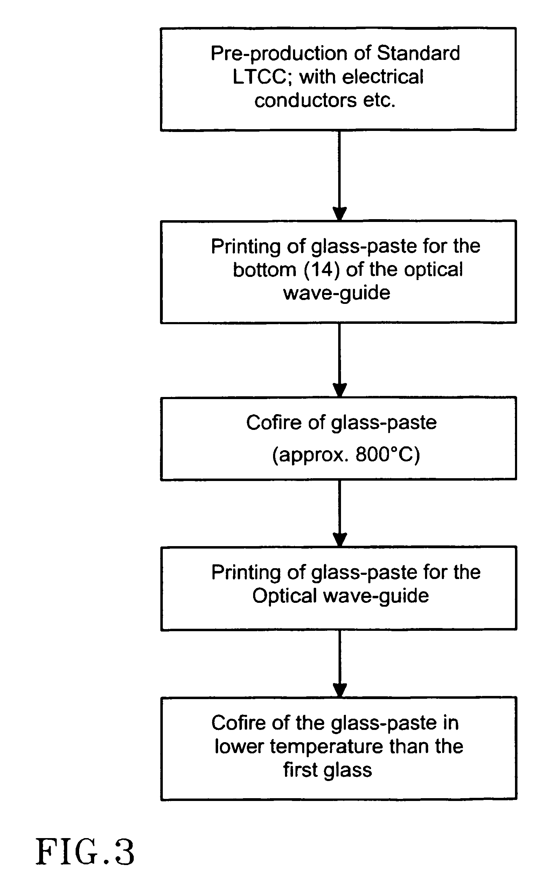

Further, the invention also embodies a method for manufacturing such a waveguides-and the use of such an arrangement for different applications, e.g. single mode 10µm/Multimode 100µm. Different steps are illustrated in fig. 3 and described below.

When manufacturing for single mode applications, for example, a paste is applied onto the carrier through offset printing. The paste is then re-melted. Offset printing allows fine and accurate waveguides.

According to the manufacturing method, a standard LTCC, e.g. provided with electrical conductors etc., is pre-produced. Then a glass-paste is printed (preferably, screen-printed) on one face of the substrate, as a support. The printed glass-paste and the substrate are co-fired (e.g. at 800 °C). When the support is dried (hardened) a second glass-paste, i.e. the optical waveguide, is printed (screen printed) on the support structure. The optical waveguide paste has other characteristics than the first paste, such as melting and curing temperatures. The optical waveguide paste is then co-fired at a lower temperature than the first co-firing. The reason for the lower temperature is that: The first glass should float out more to obtain a very flat surface, and the second glass has a more controlled viscosity to maintain a certain shape of the waveguide.

## Claims

1. A method for manufacturing a conductor-carrier arrangement (10) for conducting an optical signal, said conductor-carrier arrangement (10) comprising at least one optical guide (11) arranged on a ceramic substrate (13) the method comprising the steps of:
- providing said ceramic substrate (13) with at least one glass-paste through printing, as a supporting (14) member, performing a first co-firing of said printed glass-paste and the substrate such that said glass-past provides a flat surface,
- printing a second glass-paste as a waveguide on said support (14) as the optical guide (11) said second glass-past having a controlled viscosity to maintain a certain shape of said waveguide, and
- performing a second co-firing of said optical guide, and
- providing a third layer of cladding layer (12) over said optical guide (11) having different refractive index than the said optical guide, the method being **characterised in that** the ceramic substrate comprises one of a LTCC (Low Temperature Cofired Ceramic) or a HTCC (High Temperature Cofired Ceramic) material, that the at least one glass paste and the substrate are defined such that said glass paste floatthat the second glass paste has a different melting and curing temperature than said first glass-paste, and that said second cofiring is at a lower temperature than the first cofiring.

2. The method as claimed in claim 1, wherein said printing method is screen-printing.

3. The method as claimed in claim 1, wherein said optical guide is made of one of a glass composite material or a glass, substantially transparent material in the wavelength band used in a particular application.

4. The method as claimed in claim 1, wherein a cross section of the optical guide is substantially rectangular or semi-circular or resembles a circle segment.

5. A conductor-carrier arrangement (10) manufactured according to any of claims 1-4.

6. The conductor-carrier arrangement (10) of claim 5, wherein said substrate further comprises electrical conductors.

## Patentansprüche

1. Verfahren zum Herstellen einer Leiter-Träger-Anordnung (10), um ein optisches Signal zu leiten, wobei die Leiter-Träger-Anordnung (10) wenigstens einen Lichtleiter (11) enthält, der auf einem Keramiksubstrat (13) angeordnet ist, wobei das Verfahren die folgenden Schritte umfasst:
- Versehen des Keramiksubstrats (13) mit wenigstens einer Glaspaste durch Drucken als ein unterstützendes Element (14) und Ausführen eines ersten gemeinsamen Hartbrennens der gedruckten Glaspaste und des Substrats, derart, dass die Glaspaste eine ebene Oberfläche ergibt,
- Drucken einer zweiten Glaspaste als einen Wellenleiter auf den Träger (14) als den Lichtleiter (11), wobei die zweite Glaspaste eine kontrollierte Viskosität hat, um eine bestimmte Form des Wellenleiters aufrechtzuerhalten,
- Ausführen eines zweiten gemeinsamen Hartbrennens des Lichtleiters und
- Vorsehen einer dritten Mantelschicht (12) über dem Lichtleiter (11), die einen anderen Brechungsindex als der Lichtleiter besitzt,
wobei das Verfahren **dadurch gekennzeichnet ist, dass** das Keramiksubstrat entweder ein LTCC-Material (bei niedriger Temperatur gemeinsam hartgebrannte Keramik) oder ein HTCC-Material (bei hoher Temperatur gemeinsam hartgebrannte Keramik) enthält, dass die wenigstens eine Glaspaste und das Substrat gemeinsam hartgebrannt werden, derart, dass die Glaspaste schwimmt, dass die zweite Glaspaste eine andere Schmelz- und Härtungstemperatur als die erste Glaspaste hat und dass das zweite gemeinsam Hartbrennen bei einer niedrigeren Temperatur als das erste gemeinsame Hartbrennen erfolgt.

2. Verfahren nach Anspruch 1, wobei das Druckverfahren ein Siebdruck ist.

3. Verfahren nach Anspruch 1, wobei der Lichtleiter hergestellt ist aus einem Glasverbundmaterial oder aus einem Glas oder aus einem Material, das in dem Wellenlängenband, das in einer besonderen Anwendung verwendet wird, im Wesentlichen transparent ist.

4. Verfahren nach Anspruch 1, wobei ein Querschnitt des Lichtleiters im Wesentlichen rechtwinklig oder halbkreisförmig ist oder einem Kreissegment ähnelt.

5. Leiter-Träger-Anordnung (10), die gemäß einem der Ansprüche 1-4 hergestellt ist.

6. Leiter-Träger-Anordnung (10) nach Anspruch 5, wobei das Substrat ferner elektrische Leiter enthält.

## Revendications

1. Procédé de fabrication d'un ensemble conducteur-support (10) destiné à guider un signal optique, ledit ensemble conducteur-support (10) comprenant au moins un guide optique (11) placé sur un substrat (13) en céramique, le procédé comprenant les étapes consistant à :
- doter ledit substrat (13) en céramique d'au moins une pâte de verre par impression, en tant qu'élément de support (14), réaliser un premier cofrittage de ladite pâte de verre imprimée et du substrat de façon que ladite pâte de verre offre une surface plate,
- imprimer une deuxième pâte de verre en tant que guide d'onde sur ledit support (14) en tant que guide optique (11), ladite deuxième pâte de verre ayant une viscosité contrôlée pour maintenir une certaine forme dudit guide d'onde, et
- réaliser un deuxième cofrittage dudit guide optique, et
- appliquer une troisième couche, qui est une couche de gaine (12), sur ledit guide optique (11), ayant un indice de réfraction différent de celui dudit guide optique,
le procédé étant ***caractérisé en ce que*** le substrat de céramique comprend l'un d'un matériau LTCC (céramique cofrittée à basse température) ou d'un matériau HTCC (céramique cofrittée à haute température), ***en ce que*** ladite au moins une pâte de verre et le substrat sont cofrittés de telle sorte que ladite pâte de verre flotte, **en *ce que*** la deuxième pâte de verre possède une température de fusion et de cuisson différente de celle de ladite première pâte de verre, et ***en ce que*** ledit deuxième cofrittage est réalisé à une température inférieure à celle du premier cofrittage.

2. Procédé selon la revendication 1, dans lequel ledit procédé d'impression est la sérigraphie.

3. Procédé selon la revendication 1, dans lequel ledit guide optique est fait de l'un d'entre un matériau sensiblement transparent, un matériau de verre composite ou un verre, dans la bande de longueurs d'onde utilisée dans une application particulière.

4. Procédé selon la revendication 1, dans lequel une section transversale du guide optique est sensiblement rectangulaire ou semi-circulaire ou ressemble à un segment de cercle.

5. Ensemble conducteur-support (10) selon l'une quelconque des revendications 1 à 4.

6. Ensemble conducteur-support (10) selon la revendication 5, dans lequel ledit substrat comprend en plus des conducteurs électriques.
